# EUROPÄISCHE PATENTSCHRIFT

(11) **EP 0 467 281 B1**
(45) Veröffentlichungstag und Bekanntmachung des Hinweises auf die Patenterteilung: **20.12.1995**
(21) Anmeldenummer: 91111821.4
(22) Anmeldetag: 16.07.1991
(51) Int. Cl.: G02B 13/14

(54) **Anamorphotischer Vorsatz für ein photographisches Grundobjektiv**
Anamorphic adaptor for a main lens
Anamorphoseur pour un objectif de base

(30) Priorität: 20.07.1990 DE 4023059
(43) Veröffentlichungstag der Anmeldung: 22.01.1992
(73) Patentinhaber: Jos. Schneider Optische Werke Kreuznach GmbH & Co. KG, 55543 Bad Kreuznach (DE)
(72) Erfinder: Schröder, Wolfgang, Dipl.-Phys., W-6556 Wöllstein (DE)
(74) Vertreter: Beckensträter, Margarethe

(56) Entgegenhaltungen:
- DE-A- 3 629 438
- DE-B- 2 357 547
- GB-A- 852 961
- US-A- 3 041 935
- SOVIET INVENTIONS ILLUSTRATED, Derwent Publications Ltd., Sektion PQ : Mechanical, Woche C20, Zusammenfassung Nr. E4763C/20, 25. Juni 1980 ; & SU-A-685998

## Beschreibung

Die Erfindung betrifft einen anamorphotischen Vorsatz für ein photographisches Grundobjektiv nach dem Oberbegriff des Anspruchs 1.

Bei anamorphotischen Vorsätzen erfordert die konstruktive Ausgestaltung der Fokussierung besondere Beachtung.

Bei den älteren sehr verbreiteten anamorphotischen Vorsätzen, die in einem Schnitt frei von Brechkraft sind, kann zuerst das Grundobjektiv und danach der Vorsatz fokussiert werden; diese Art der Fokussierung ist schwierig und kann nur durch aufwendige Steuerkurven mechanisch erleichtert werden.

Durch die DE-OS 34 36 913 ist ein Vorschlag bekannt geworden, eine Teilbaugruppe des anamorphotischen Vorsatzes mit dem Grundobjektiv oder einer Teilbaugruppe des Grundobjektivs gekoppelt zu verschieben, wodurch wenigstens für einen kleinen Fokussierbereich die Bildschärfe erhalten bleibt. Dieser Lösungsvorschlag ist jedoch insbesondere wegen der damit verbundenen Probleme der Korrektion der Bildfeldwölbung nicht zufriedenstellend.

Eine verbesserte Lösung des Fokussierproblems stellt die Konstruktion des anamorphotischen Vorsatzes nach der DE-OS 36 29 438 dar, bei der durch axiale Bewegung einer Wirkungsgruppe des anamorphotischen Vorsatzes die Scharfstellung für die senkrechte und waagrechte Axialebene über den ganzen Fokussierbereich aufrechterhalten bleibt. Ein Nachteil dieser Konstruktion besteht jedoch darin, daß die Brechkraft der zweiten Baugruppe des viergliedrigen anamorphotischen Vorsatzes im Vergleich zu den übrigen Baugruppen recht stark ist und dadurch entweder ein größerer Aufwand an Linsen erforderlich wird oder die Abbildungsqualität begrenzt bleibt.

Der Erfindung liegt die Aufgabe zugrunde, einen anamorphotischen Vorsatz zu schaffen, der bei einfachem Aufbau eine problemlose Fokussierung der Kombination von anamorphotischem Vorsatz und Grundobjektiv bei optimalen Korrektionsmöglichkeiten bietet.

Erfindungsgemäß wird diese Aufgabe durch einen anamorphotischen Vorsatz mit den Merkmalen des Patentanspruchs 1 gelöst. Vorteilhafte Weiterbildungen des Erfindungsgedankens ergeben sich aus den Unteransprüchen.

Bei dem erfindungsgemäßen anamorphotischen Vorsatz kann beim Fokussieren die Entfernungseinstellung des Grundobjektives unverändert bleiben. Zum Fokussieren wird entweder die erste objektseitige axialsymmetrische Baugruppe des anamorphotischen Vorsatzes oder eine darauf folgende dreiteilige Wirkungsgruppe verschoben. In beiden Fällen ist die Wirkung des Fokussierhubes in der senkrechten und waagerechten Axialebene gleich, so daß das Bild über den gesamten Fokussierbereich durch die axiale Bewegung einer einzelnen Wirkungsgruppe scharf bleibt. Der erfindungsgemäße anamorphotische Vorsatz hat den ganz wesentlichen Vorteil, daß durch die gewählte Brechkraftfolge insbesondere die Brechkraft der zweiten Baugruppe des anamorphotischen Vorsatzes merklich geringer ist. Eine vergleichende Analyse der optischen Korrigierbarkeit läßt dies sehr deutlich werden.

Ein Ausführungsbeispiel der Erfindung wird nachfolgend anhand der anhängenden Zeichnung näher beschrieben.

Es zeigen
- Fig. 1: einen erfindungsgemäßen Anamorphoten im senkrechten Axialschnitt und
- Fig. 2: den erfindungsgemäßen Anamorphoten im waagerechten Axialschnitt.

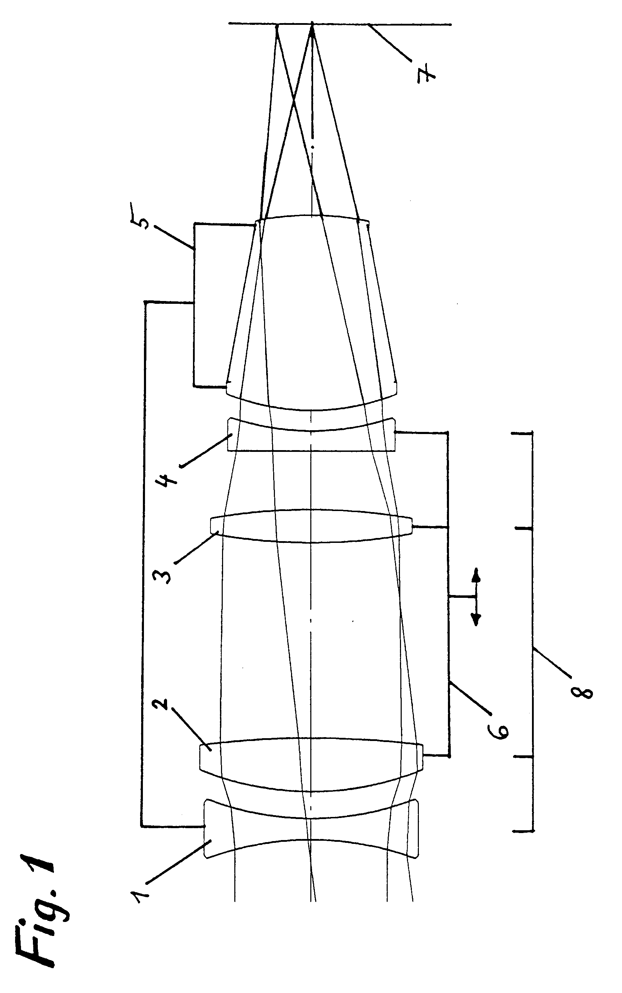

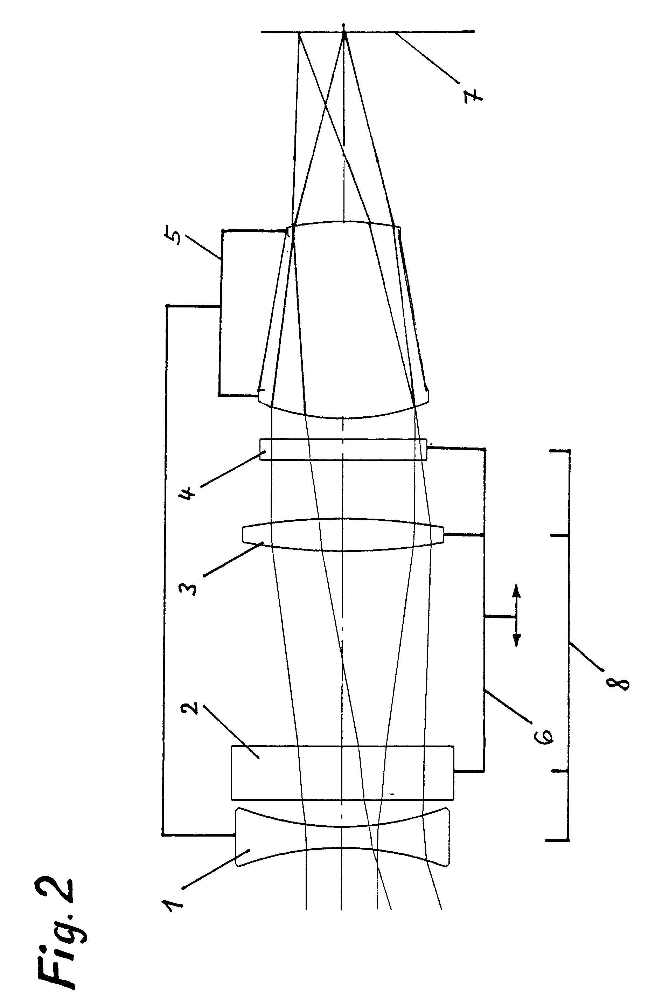

In Fig. 1 und Fig. 2 ist mit 8 ein anamorphotischer Vorsatz für ein ortsfestes photographisches Grundobjektiv 5 markiert, das in eine Bildfläche 7 abbildet. Der Vorsatz 8 ist für das auf eine feste Entfernung, vorzugsweise Unendlich, eingestellte Grundobjektiv 5 ausgebildet und weist objektseitig eine zerstreuende axialsymmetrische Baugruppe 1 und eine zwischen dieser und dem Grundobjektiv 5 angeordnete, mit 6 markierte, dreiteilige Baugruppe mit anamorphotischer Wirkung auf, die ihrerseits objektseitig aus einer sammelnden zylindrischen Teilbaugruppe 2, in der Mitte aus einer sammelnden axialsymmetrischen Teilbaugruppe 3 und bildseitig aus einer zerstreuenden zylindrischen Teilbaugruppe 4 besteht. In einer Axialebene ergänzen sich jeweils die ersten beiden Baugruppen 1 und 2 sowie die letzten beiden Baugruppen 3 und 4 des anamorphotischen Vorsatzes zu einer afokalen Wirkungsgruppe, und die Winkelvergrößerung beträgt im wesentlichen 1. In der dazu senkrechten Axialebene ergänzen sich die erste 1 und dritte 3 axialsymmetrische Baugruppe des anamorphotischen Vorsatzes 8 zu einer afokalen Wirkungsgruppe mit einer Winkelvergrößerung, die einem gewünschten anamorphotischen Faktor entspricht. Es bildet entweder die objektseitige zerstreuende axialsymmetrische Baugruppe 1 des anamorphotischen Vorsatzes 8 oder die zwischen dieser und dem Grundobjektiv 5 angeordnete dreiteilige Baugruppe mit anamorphotischer Wirkung 6 einen Fokussierteil, wobei die jeweils andere Baugruppe 6 bzw. 1 stationär zum Grundobjektiv 5 bleibt.

Der anamorphotische Vorsatz 8 kann mit dem auf Unendlich eingestellten Grundobjektiv 5 zu einem Gesamtobjektiv zusammengebaut und/oder mit dem Grundobjektiv 5 lösbar verbunden sein.

In der Zeichnung Fig. 1 und Fig. 2 sind die vier Baugruppen des anamorphotischen Vorsatzes 8 in Beschränkung auf das Prinzip als Einzellinsen dargestellt. Es handelt sich also nicht um ein korrigiertes Beispiel. Die Strahlengänge in Fig. 1 und Fig. 2 sind für ein unendlich fernes Objekt gerechnet. Hinter dem anamorphotischen Vorsatz 8 sind die Strahlengänge in beiden Schnitten afokal. Dadurch ist gewährleistet, daß die bildseitige Schnittweite hinter dem Grundobjektiv 5 in beiden Schnitten übereinstimmt.

## Patentansprüche

1. Anamorphotischer Vorsatz (8) für ein Grundobjektiv (5), welches auf eine feste Entfernung eingestellt ist, mit objektseitig einer zerstreuenden axialsymmetrischen Baugruppe (1) und einer zwischen dieser und dem Grundobjektiv angeordneten dreiteiligen anamorphotischen Baugruppe (6), welche objektseitig aus einer sammelnden zylindrischen Baugruppe (2) und an der dem Grundobjektiv zugewandten Seite aus einer sammelnden axialsymmetrischen Baugruppe (3) und einer zerstreuenden zylindrischen Baugruppe (4) besteht, und mit Mitteln zur axialen Verstellung entweder der zerstreuenden axialsymmetrischen Baugruppe (1) oder der dreiteiligen anamorphotischen Baugruppe (6) in bezug auf das Grundobjektiv (5) zur Fokussierung des aus Grundobjektiv und Vorsatz bestehenden Gesamtsystems, wobei, wenn die Fokussierung des Gesamtsystems so eingestellt ist, daß sie der festen Einstellung des Grundobjektivs (5) entspricht, in der Axialebene, in der die zylinderischen Baugruppen (2, 4) ihre maximale Wirkung haben, sich die Wirkungen der zerstreuenden axialsymmetrischen Baugruppe (1) und der sammelnden zylindrischen Baugruppe (2) und die Wirkungen der sammelnden axialsymmetrischen Baugruppe (3) und der zerstreuenden zylindrischen Baugruppe (4) jeweils kompensieren, und in der Axialebene, in der die zylinderischen Baugruppen (2, 4) keine Wirkung haben, die beiden axialsymmetrischen Baugruppen (1, 3) einen die Brennweite des Grundobjektivs (5) um den Anamorphotfaktor verkürzenden Weitwinkelvorsatz bilden, **dadurch gekennzeichnet,** daß die sammelnde axialsymmetrische Baugruppe (3) zwischen der sammelnden (2) und der zerstreuenden zylindrischen Baugruppe (4) angeordnet ist.

2. Anamorphotischer Vorsatz nach Anspruch 1, dadurch gekennzeichnet, daß der Vorsatz (8) mit dem auf Unendlich gestellten Grundobjektiv (5) zu einem Gesamtobjektiv zusammengebaut ist.

3. Anamorphotischer Vorsatz nach Anspruch 1 oder 2, dadurch gekennzeichnet, daß der Vorsatz (8) mit dem Grundobjektiv (5) lösbar verbunden ist.

## Claims

1. An anamorphic adaptor (8) for a main lens (5) which is set to a fixed distance, having on the lens side a divergent, axially symmetrical structural component (1) and a three-piece anamorphic structural component (6) disposed between the latter and the main lens, which three-piece anamorphic structural component consists of a convergent, cylindrical structural component (2) and a convergent, axially symmetrical structural component (3), and of a divergent cylindrical structural component (4) facing the lens, on the lens side, and having means for the axial adjustment either of the divergent, axially symmetrical structural component (1) or of the three-piece, anamorphic structural component (6) in relation to the main lens (5) for the focusing of the complete system consisting of the main lens and the adaptor, wherein, when the focusing of the complete system is set so that it corresponds to the fixed setting of the main lens (5), in the axial plane in which the cylindrical structural components (2, 4) have their maximum effect the effects of the divergent, axially symmetrical structural component (1) and the convergent, cylindrical structural component (2) and the effects of the convergent, axially symmetrical structural component (3) and the divergent, cylindrical structural component (4) compensate for each other each time, and in the axial plane in which the cylindrical structural components (2, 4) have no effect the two axially symmetrical structural components (1, 3) form a wide-angle adaptor which shortens the focal length of the main lens (5) by the anamorphosis factor, characterised in that the convergent, axially symmetrical structural component (3) is disposed between the convergent (2) and the divergent cylindrical structural component (4).

2. An anamorphic adaptor according to claim 1, characterised in that the adaptor (8) is assembled to form a complete lens with the main lens (5) set to infinity.

3. An anamorphic adaptor according to claim 1 or 2, characterised in that the adaptor (8) is detachably connected to the main lens (5).

## Revendications

1. Amamorphoseur (8) pour un objectif de base (5) réglé sur une distance fixe, comportant, côté objet, une unité axisymétrique divergente (1) et une unité anamorphotique (6) en trois parties qui est disposée entre l'unité (1) et l'objectif de base et qui se compose, côté objet, d'une unité cylindrique convergente (2) et, du côté tourné vers l'objectif de base, d'une unité axisymétrique convergente (3) et d'une unité cylindrique divergente (4), et comportant des moyens pour le réglage axial de l'unité axisymétrique divergente (1) ou de l'unité anamorphotique (6) en trois parties par rapport à l'objectif de base (5), en vue de la focalisation du système global formé de l'objectif de base et de l'anamorphoseur, étant précisé que lorsque la focalisation du système global est réglée de telle sorte qu'elle correspond au réglage fixe de l'objectif de base (5), les effets de l'unité axisymétrique divergente (1) et de l'unité cylindrique convergente (2) et les effets de l'unité axisymétrique convergente (3) et de l'unité cylindrique divergente (4) se compensent dans le plan axial dans lequel les unités cylindriques (2, 4) ont leur effet maximum, tandis que dans le plan axial dans lequel ces unités cylindriques (2, 4) n'ont aucun effet, les deux unités axisymétriques (1, 3) forment un grand-angle qui réduit la distance focale de l'objectif de base (5) suivant le facteur d'anamorphose,
caractérisé en ce que l'unité axisymétrique convergente (3) est disposée entre les unités cylindriques convergente (2) et divergente (4).

2. Anamorphoseur (8) selon la revendication 1, caractérisé en ce qu'il est assemblé avec l'objectif de base (5) mis au point sur l'infini, pour former un objectif global.

3. Anamorphoseur (8) selon la revendication 1 ou 2, caractérisé en ce qu'il est relié de façon amovible à l'objectif de base (5).
